# DEMANDE DE BREVET EUROPEEN

(11) **EP 4 550 499 A1**
(43) Date de publication de la demande: **07.05.2025**
(21) Numéro de dépôt: 24209496.9
(22) Date de dépôt: 29.10.2024
(51) Int. Cl.: H01M 10/04, H01M 50/209, H01M 50/249, H01M 50/291, H01M 50/293, H01M 50/264

(54) **BATTERIE POUR PLATEFORME NAVALE ET PROCÉDÉ DE MONTAGE**

(30) Priorité: 30.10.2023 FR 2311792
(71) Demandeur: NAVAL Group, 75015 Paris (FR)
(72) Inventeur: DAPVRIL, Lionel, 56311 LORIENT CEDEX (FR); FERAL, Hervé, 56311 LORIENT CEDEX (FR)
(74) Mandataire: Lavoix

(57) **Abrégé**

Batterie électrique pour plateforme navale, la batterie comprenant une pluralité de blocs (20A...20F) structurellement analogues, comprenant :
- un ensemble (22) comportant une pluralité d'éléments (24) empilés selon une direction longitudinale (L), les éléments comprenant des accumulateurs (42) prismatiques, l'ensemble ayant une forme parallélépipédique et comportant une face principale (74), une face opposée (76), et quatre faces latérales (78, 80, 82, 84),
- des éléments métalliques de protection s'étendant au moins en vis-à-vis des faces latérales et de la face opposée,
- une première bague (28) comprenant une matière plastique, de forme rectangulaire, entourant la face principale et configurée pour exercer une pression (P1) longitudinale sur deux des quatre faces latérales,
- une deuxième bague (30) entourant la face opposée et configurée pour exercer une pression (P2) longitudinale sur deux des quatre faces latérales,
la première et la deuxième bague maintenant la pluralité d'éléments à distance des éléments métalliques de protection.

## Description

La présente invention concerne une batterie pour plateforme navale, la batterie comprenant une pluralité de blocs structurellement analogues les uns aux autres, chacun des blocs comprenant :
- un ensemble comportant une pluralité d'éléments empilés selon une direction longitudinal, les éléments comprenant des accumulateurs prismatiques, chacun des accumulateurs ayant une face principale perpendiculaire à une première direction transversale perpendiculaire à la direction longitudinale et comportant deux bornes électriques, chacun des accumulateurs ayant une face opposée située à l'opposé de la face principale selon la première direction transversale, et quatre faces latérales parallèles à la première direction transversale, l'ensemble ayant une forme parallélépipédique et comportant une face principale, une face opposée, et quatre faces latérales, et
- des éléments métalliques de protection s'étendant au moins en vis-à-vis des faces latérales et de la face opposée de l'ensemble.

L'invention concerne également un procédé d'assemblage d'une telle batterie, et une plateforme navale comportant au moins une telle batterie.

La batterie est par exemple de type lithium-ion et comporte de nombreux blocs de manière à pouvoir alimenter différents systèmes d'une plateforme navale, par exemple son système de propulsion.

Lors de l'assemblage d'une telle batterie, une précontrainte est appliquée selon la direction longitudinale, et l'ensemble est ensuite maintenu en compression longitudinale par différents moyens, tels que des tirants ou des cerclages.

Pour assurer une isolation électrique entre l'ensemble et les éléments métalliques de protection, des flasques intermédiaires et/ou des cadres sont ajoutés, ce qui a un impact négatif sur le volume et la masse de la batterie, donc sur ses performances.

Pour améliorer les performances de la batterie, il est connu d'obtenir la précontrainte par des rubans adhésifs. Ces derniers assurent une bonne isolation électrique, mais ont tendance à se détendre, ce qui créer des problèmes dimensionnels durant le montage de la batterie.

Il est également connu d'utiliser des feuillards soudés entre eux, qui apportent une meilleure rigidité à l'ensemble, mais sont complexes à fabriquer et à poser.

Un but de l'invention est donc de fournir une batterie plus simple et moins coûteuse à fabriquer, tout en présentant de bonnes performances.

À cet effet, l'invention a pour objet une batterie électrique selon la revendication 1.

Selon des modes de réalisation particuliers, la batterie comprend l'une ou plusieurs des caractéristiques correspondant aux revendications 2 à 9, prise(s) isolément ou selon toutes les combinaisons techniquement possibles.

L'invention concerne également une plateforme navale comprenant au moins une batterie telle que décrite ci-dessus.

L'invention concerne aussi un procédé de montage selon la revendication 10.

L'invention sera mieux comprise à la lecture de la description qui va suivre, donnée uniquement à titre d'exemple et faite en se référant aux dessins annexés, sur lesquels :
- la figure 1 est une vue schématique d'une plateforme navale selon l'invention,

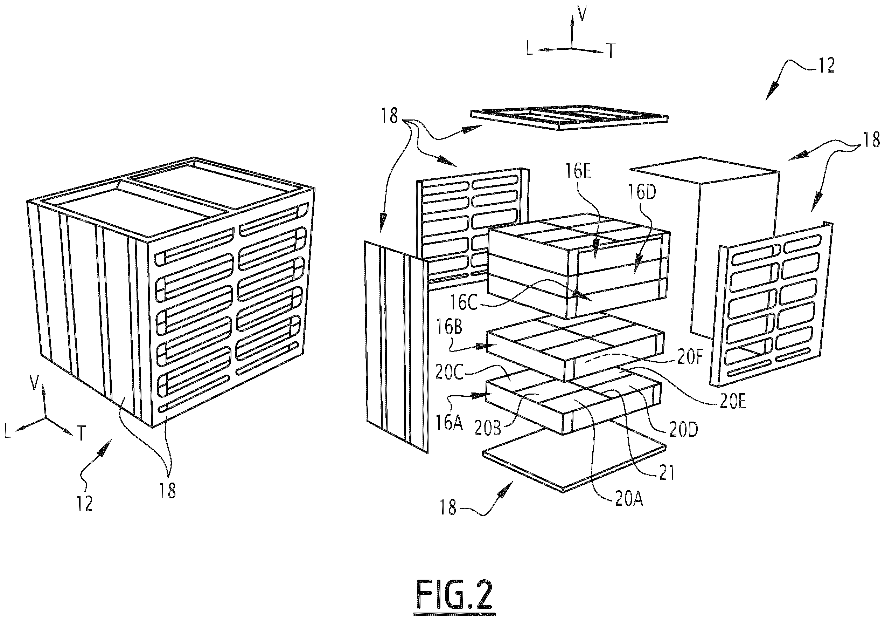

- la figure 2 est une vue schématique en perspective (à gauche) et en éclaté (à droite) d'une batterie selon l'invention appartenant à la plateforme navale représentée sur la figure 1,
- la figure 3 est vue en perspective d'un des blocs de la batterie représentée sur les figures 1 et 2, sans les éléments métalliques de protection,
- la figure 4 est vue éclatée des éléments représentés sur la figure 3, montrant notamment l'empilement comportant les accumulateurs, et
- la figure 5, est une vue du bloc représenté partiellement sur les figures 3 et 4, en section perpendiculairement à la direction longitudinale à travers un des accumulateurs.

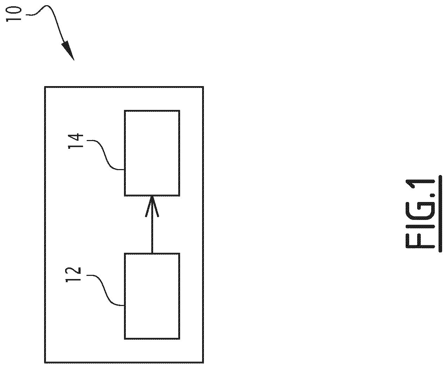

En référence à la figure 1, on décrit une plateforme navale 10 selon l'invention.

La plateforme navale 10 est par exemple un engin sous-marin, ou en variante un navire de surface. La plateforme navale 10 comprend au moins une batterie 12 électrique, et un système de propulsion 14, avantageusement alimenté en électricité par la batterie.

La batterie 12 est par exemple de type lithium-ion, et présente avantageusement une forme parallélépipédique.

Dans l'exemple, la batterie 12 comprend avantageusement plusieurs modules 16 disposés les uns sur les autres dans une première direction transversale V.

La batterie 12 comprend par exemple des éléments 18 fixés les uns sur les autres pour former un cadre autour de la pluralité de modules 16, de façon à protéger les modules et assurer une cohésion mécanique de la batterie.

Il va de soi que la batterie 12 comporte aussi des connecteurs électriques, par exemple des jeux de barres ou des câbles, non représentés et connus en eux-mêmes. On s'intéresse ici à la structure mécanique de la batterie 12.

Les modules 16 sont avantageusement analogues les uns aux autres structurellement, aussi seul l'un d'entre eux sera décrit ci-après.

Le module 16 a par exemple une forme rectangulaire (y compris carrée) en vue selon la première direction transversale V.

Les six blocs 20A à 20F forment par exemple deux rangées, chacune s'étendant dans une deuxième direction transversale T perpendiculaire à la première direction transversale V, et destinée à être horizontale dans l'exemple.

Les deux rangées sont par exemple séparées l'une de l'autre par un élément 21 structurel du module 16 dans une direction longitudinale L perpendiculaire à la première direction transversale V et à la deuxième direction transversale T, la direction longitudinale L étant donc horizontale dans l'exemple.

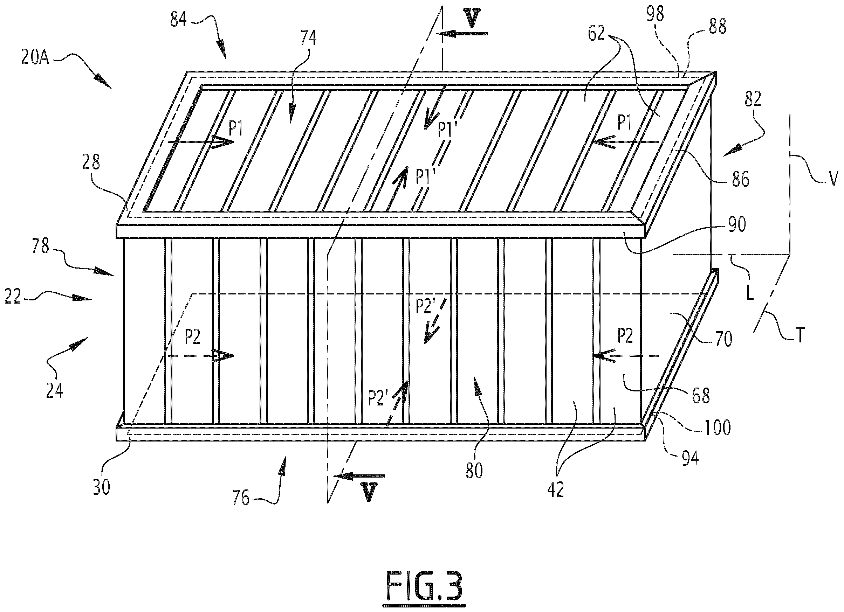

Les blocs 20 sont avantageusement analogues les uns aux autres structurellement, aussi seul l'un d'entre eux sera décrit ci-après en référence aux figures 3 à 5.

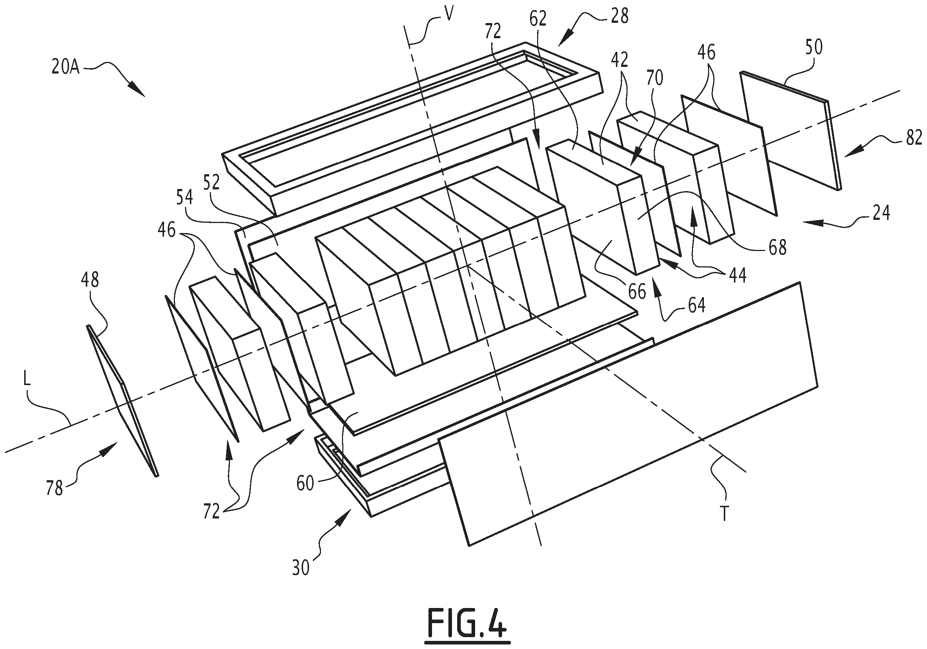

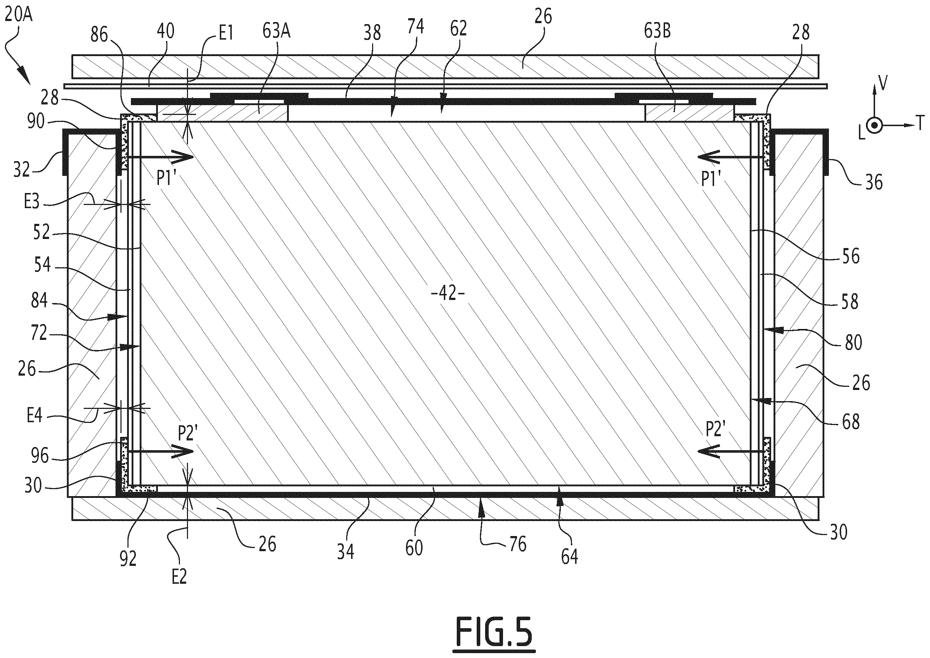

Le bloc 20 comprend un ensemble 22 comportant une pluralité d'éléments 24 empilés selon la direction longitudinale L (figures 3 et 4), des éléments métalliques de protection 26 (figure 5), et une première bague 28 et une deuxième bague 30 (figures 3 à 5) s'étendant entre l'ensemble 22 et les éléments métalliques de protection 26.

Dans l'exemple, le bloc 20 comprend aussi des isolants 32, 34, 36, 38 et une plaque de protection 40 située au-dessus de l'empilement sur la figure 5.

Les éléments 24 empilés comprennent des accumulateurs 42 prismatiques. Les éléments 24 empilés comprennent par exemple des couches d'adhésif 44 et des feuilles de papier 46 (figure 3) situées de part et d'autres accumulateurs 42 longitudinalement.

Par exemple, l'ensemble 22 comprend aussi deux plaques de protection 48, 50 formant respectivement deux extrémités longitudinales de l'empilement, deux plaques de protection 52, 54 situées d'un côté de l'empilement dans la deuxième direction transversale T (à gauche sur la figure 5), et deux plaques de protection 56, 58 situées de l'autre côté de l'empilement (à droite sur la figure 5). Dans l'exemple, l'ensemble 22 comprend aussi une plaque de protection 60 située du côté de l'empilement opposé à la plaque de protection 40, c'est-à-dire sous l'empilement sur la figure 5.

Les accumulateurs 42 sont avantageusement analogues les uns aux autres

Chacun des accumulateurs 42 a une face principale 62 perpendiculaire à la première direction transversale V et comportant deux bornes électriques 63A, 63B, par exemple espacées l'une de l'autre dans la deuxième direction transversale T. Chacun des accumulateurs 42 a une face opposée 64 située à l'opposé de la face principale 62 selon la première direction transversale V, et quatre faces latérales 66, 68, 70, 72 parallèles à la première direction transversale V. Chacun des accumulateurs 42 a par exemple une forme générale parallélépipédique.

On définit aussi, de manière analogue à ce qui a été fait pour chacun des accumulateurs 42, une face principale 74, une face opposée 76, et quatre faces latérales 78, 80, 82, 84 de l'ensemble 22.

Les éléments métalliques de protection 26 s'étendent respectivement en vis-à-vis des faces latérales 78, 80, 82, 84 et de la face opposée 76 de l'ensemble 22. Dans l'exemple, l'un des éléments métalliques de protection 26 s'étend en vis-à-vis de la face principale 74.

Les plaques de protection 52, 54, 56, 58 sont maintenues contre les accumulateurs 42 par la première bague 28 et par la deuxième bague 30 et forment les faces latérales 80 et 84 de l'ensemble 22.

Les plaques de protection 48, 50 sont maintenues par la première bague 28 et par la deuxième bague 30 et forment les faces latérales 78 et 82 de l'ensemble 22.

La plaque de protection 60 est maintenue contre la face opposée 64 des accumulateurs 42 par la deuxième bague 30 et forme la face opposée 76 de l'ensemble 22.

La plaque de protection 40 est située entre l'un des éléments métalliques de protection 26 et la face principale 62 de chacun des accumulateurs 42 dans la première direction transversale V.

La première bague 28 et la deuxième bague 30 comprennent une matière plastique, et en sont avantageusement constituées. La première bague 28 et la deuxième bague 30 sont de forme rectangulaire en vue selon la première direction transversale V. Avantageusement, la première bague 28 et la deuxième bague 30 sont structurellement identiques l'une à l'autre.

La première bague 28 entoure la face principale 74 de l'ensemble 22 autour de la première direction transversale V et est configurée pour exercer une première pression P1 longitudinale sur les faces latérales 78, 82 de l'ensemble 22. Dans l'exemple, la première bague 28 exerce aussi une pression P1' sur les faces latérales 80, 84 de l'ensemble 22 dans la deuxième direction transversale T.

La première bague 28 et la deuxième bague 30 s'étendent entre l'ensemble 22 et les éléments métalliques de protection 26 et maintiennent la pluralité d'éléments 24 à distance des éléments métalliques de protection, ce qui contribue à la bonne isolation électrique de l'ensemble 22.

La deuxième bague 30 entoure la face opposée 76 de l'ensemble 22 autour de la première direction transversale V et est configurée pour exercer une deuxième pression P2 longitudinale sur les faces latérales 78, 82 de l'ensemble 22. Dans l'exemple, la deuxième bague 30 exerce aussi une pression P2' sur les faces latérales 80, 84 de l'ensemble 22 dans la deuxième direction transversale T.

La première bague 28 et la deuxième bague 30 sont des isolants électriques, c'est-à-dire que leur résistivité électrique à 300 K est par exemple supérieure ou égale à 10⁵ Ω.m.

Par exemple, la première bague 28 et la deuxième bague 30 comprennent au moins 90% en masse de polyamide, avantageusement du nylon 6.

Dans l'exemple, la première bague 28 comprend une première portion 86 s'étendant contre la face principale 74 de l'ensemble 22, sur un pourtour 88 de la face principale 74, et une deuxième portion 90 s'étend à partir de la première portion 86 dans la première direction transversale V et ceinturant les faces latérales 78, 80, 82, 84 de l'ensemble 22.

Dans l'exemple, la deuxième bague 30 comprend une première portion 92 s'étendant contre la face opposée 76 de l'ensemble 22, sur un pourtour 94 de la face opposée 76, et une deuxième portion 96 s'étend à partir de la première portion 92 dans la première direction transversale V et ceinturant les faces latérales 78, 80, 82, 84 de l'ensemble 22.

Chacune de la première bague 28 et la deuxième bague 30 s'étend respectivement selon un lacet fermé 98, 100, et présente, perpendiculairement au lacet, une section avantageusement en « L » et de forme constante le long du lacet.

Les premières portions 86, 92 de la première bague et de la deuxième bague respectivement présentent avantageusement des épaisseurs E1, E2 (figure 5) selon la première direction transversale V comprises entre 0,5 et 1,5 mm, et par exemple d'environ 1,0 mm.

Les deuxièmes portions 90, 96 de la première bague 28 et de la deuxième bague 30 présentent localement des épaisseurs E3, E4 perpendiculairement à celle des faces latérales de l'ensemble 22 la plus proche de la deuxième portion, les épaisseurs E3, E4 étant comprises entre 0,5 et 1,5 mm, et par exemple d'environ 1,0 mm.

On va maintenant décrite un procédé de montage selon l'invention de la batterie 12.

Tout d'abord, on obtient l'ensemble 22, la première bague 28, la deuxième bague 30, et les éléments métalliques de protection 26.

L'ensemble 22 est mis en compression longitudinale, par exemple par une machine connue en elle-même et qui ne sera pas décrite, pour obtenir un ensemble 22 comprimé (ou précontraint).

Puis, la première bague 28 et la deuxième bague 30 sont posées sur l'ensemble 22 comprimé, la première bague et la deuxième bague exerçant respectivement la première pression P1 et la deuxième pression P2, afin d'obtenir un ensemble bagué. La pression de la machine sur l'ensemble 22 est alors relâchée, la première bague et la deuxième bague assurant une cohérence mécanique avantageusement suffisante pour manipuler l'ensemble.

Ensuite, on disposition des éléments métalliques de protections 26 au moins en vis-à-vis des faces latérales 78, 80, 82, 84 et de la face opposée 76 de l'ensemble 22 bagué pour obtenir le bloc 20A.

On fabrique de même les autres blocs 20, et on les assemble pour former les modules 16 et la batterie 12.

Grâce aux caractéristiques décrites ci-dessus, le maintien de l'ensemble 22 durant le montage de la batterie 12 est assuré par la première bague 28 et la deuxième bague 30 de manière simple et efficace. La batterie 12 est plus simple et moins coûteuse à fabriquer, tout en présentant de bonnes performances.

En outre, lorsque la batterie 12 est à l'état monté, la première bague 28 et la deuxième bague 30 permettent une distance d'isolation correcte et stable dans le temps entre l'ensemble 22 et les éléments métalliques de protection 26, donc avec les cadres des blocs 20A à 20F et des modules.

Les bagues 28, 30 assurent une précontrainte de l'ensemble 22, sans déformation, sans relaxe dans le temps et sans pression excessive sur les accumulateurs 42 pouvant générer un endommagement. Les bagues 28, 30 simplifient l'assemblage des blocs dans le chaque module, et garantissent des distances d'isolement suffisantes pour chaque bloc.

La machine de compression est capable d'accepter la mise en place des bagues en toute sécurité pour l'opérateur. Grâce aux bagues 28, 30, l'ensemble 22 conserve la contrainte de compression et les dimensions prédéfinies pour une longue durée afin être intégré dans les blocs et les modules.

L'invention permet une uniformité et une répétabilité du serrage des accumulateurs 42, un bon maintien mécanique et un respect des dimensions lors de la manipulation des ensembles.

L'outillage ou l'équipement mis en oeuvre est peu complexe, et la pose des bagues 28, 30 est rapide.

En outre, les bagues 28, 30 présentent une bonne tenue dans le temps durant le cycle de vie de la batterie 12. Une fois que l'ensemble 22 est installé au sein d'un module, la compression apportée par les bagues 28, 30 est moins utile voire inutile. Leur présence permet néanmoins d'augmenter les distances d'isolement dans l'air et en ligne de fuite.

La forme des bagues 28, 30 fait qu'elles sont simples à obtenir, par exemple par injection de matière plastique. Le moule associé (non représenté) est simple.

L'ensemble 22 est maintenu sans procédés spéciaux, de type modules résinés, ce qui est un gain pour l'industrialisation de la batterie 12, sa maintenance curative et la gestion de sa fin de vie. La réparabilité de la batterie 12 est améliorée.

## Revendications

1. Batterie (12) électrique pour plateforme navale (10), la batterie (12) comprenant une pluralité de blocs (20A...20F) structurellement analogues les uns aux autres, chacun des blocs (20A... 20F) comprenant :
- un ensemble (22) comportant une pluralité d'éléments (24) empilés selon une direction longitudinale (L), les éléments (24) comprenant des accumulateurs (42) prismatiques, chacun des accumulateurs (42) ayant une face principale (62) perpendiculaire à une première direction transversale (V) perpendiculaire à la direction longitudinale (L) et comportant deux bornes (63A, 63B) électriques, chacun des accumulateurs (42) ayant une face opposée (64) située à l'opposé de la face principale (62) selon la première direction transversale (V), et quatre faces latérales (66, 68, 70, 72) parallèles à la première direction transversale (V), l'ensemble (22) ayant une forme parallélépipédique et comportant une face principale (74), une face opposée (76), et quatre faces latérales (78, 80, 82, 84),
- des éléments métalliques de protection (26) s'étendant au moins en vis-à-vis des faces latérales (78, 80, 82, 84) et de la face opposée (76) de l'ensemble (22),
- une première bague (28) comprenant une matière plastique, de forme rectangulaire en vue selon la première direction transversale (V), entourant la face principale (74) de l'ensemble (22) autour de la première direction transversale (V) et configurée pour exercer une première pression (P1) au moins longitudinale sur deux des quatre faces latérales (78, 80, 82, 84) de l'ensemble (22), et
- une deuxième bague (30) comprenant une matière plastique, de forme rectangulaire en vue selon la première direction transversale (V), entourant la face opposée (76) de l'ensemble (22) autour de la première direction transversale (V) et configurée pour exercer une deuxième pression (P2) au moins longitudinale sur deux des quatre faces latérales (78, 80, 82, 84) de l'ensemble (22),
la première bague (28) et la deuxième bague (30) s'étendant entre l'ensemble (22) et les éléments métalliques de protection (26) et maintenant la pluralité d'éléments (24) à distance des éléments métalliques de protection (26).

2. Batterie (12) selon la revendication 1, dans laquelle la première bague (28) et la deuxième bague (30) comprennent au moins 90% en masse de polyamide.

3. Batterie (12) selon la revendication 2, dans laquelle la première bague (28) et la deuxième bague (30) comprennent au moins 90% en masse de nylon 6.

4. Batterie (12) selon l'une quelconque des revendications 1 à 3, dans laquelle :
- la première bague (28) comprend une première portion (86) s'étendant contre la face principale (74) de l'ensemble (22), sur un pourtour (88) de la face principale (74), et une deuxième portion (90) s'étend à partir de la première portion (86) dans la première direction transversale (V) et ceinturant les faces latérales (78, 80, 82, 84) de l'ensemble (22), et
- la deuxième bague (30) comprend une première portion (92) s'étendant contre la face opposée (76) de l'ensemble (22), sur un pourtour (94) de la face opposée (76), et une deuxième portion (96) s'étend à partir de la première portion (92) dans la première direction transversale (V) et ceinturant les faces latérales (78, 80, 82, 84) de l'ensemble (22).

5. Batterie (12) selon la revendication 4, dans laquelle :
- les premières portions (86, 92) de la première bague (28) et de la deuxième bague (30) présentent des épaisseurs (E1, E2) selon la première direction transversale comprises entre 0,5 et 1,5 mm, et
- les deuxièmes portions (90, 96) de la première bague (28) et de la deuxième bague (30) présentent localement des épaisseurs (E3, E4), perpendiculairement à celle des faces latérales (78, 80, 82, 84) de l'ensemble (22) la plus proche des deuxièmes portions (90, 96), les épaisseurs (E3, E4) étant comprises entre 0,5 et 1,5 mm.

6. Batterie (12) selon l'une quelconque des revendications 1 à 5, dans laquelle chacune de la première bague (28) et la deuxième bague (30) s'étend selon un lacet (98, 100) fermé, et présente, perpendiculairement au lacet (98, 100), une section en « L » de forme constante le long du lacet (98, 100).

7. Batterie (12) selon l'une quelconque des revendications 1 à 6, dans laquelle chacune des faces latérales (78, 80, 82, 84) et de la face opposée (76) de l'ensemble (22) est formée respectivement par une ou plusieurs plaques de protection (48, 50, 52, 54, 56, 58, 60) maintenues contre la pluralité d'éléments (24) par la première bague (28) ou par la deuxième bague (30).

8. Batterie (12) selon l'une quelconque des revendications 1 à 7, dans laquelle la première bague (28) et la deuxième bague (30) sont structurellement identiques l'une à l'autre.

9. Batterie (12) selon l'une quelconque des revendications 1 à 8, comprenant plusieurs modules 16 adjacents les uns aux autres dans la première direction transversale (V), chacun des modules 16 comprenant plusieurs blocs 20 de ladite pluralité, lesdits plusieurs blocs 20 étant adjacents les uns aux autres perpendiculairement à la première direction transversale (V).

10. Procédé de montage d'une batterie (12) telle que décrite par l'une quelconque des revendications 1 à 9, le procédé comprenant les étapes suivantes :
- obtention de l'ensemble (22), de la première bague (28), de la deuxième bague (30), et des éléments métalliques de protection (26),
- mise en compression longitudinale de l'ensemble (22),
- pose de la première bague (28) et de la deuxième bague (30) sur l'ensemble (22), la première bague (28) et la deuxième bague (30) exerçant la première pression (P1) et la deuxième pression (P2), afin d'obtenir un ensemble (22) bagué,
- disposition des éléments métalliques de protections (26) au moins en vis-à-vis des faces latérales (78, 80, 82, 84) et de la face opposée (76) de l'ensemble (22) bagué pour obtenir l'un des blocs 20,
- obtention des autres desdits blocs 20, et
- assemblage desdits blocs 20.
